# EUROPÄISCHE PATENTANMELDUNG

(11) **EP 3 026 019 A1**
(43) Veröffentlichungstag der Anmeldung: **01.06.2016**
(21) Anmeldenummer: 14194628.5
(22) Anmeldetag: 25.11.2014
(51) Int. Cl.: C01G 51/00, C01G 53/00, H01M 4/505, H01M 4/525, H01M 10/052, H01M 10/0525, C01B 13/34, C01G 45/12

(54) **Verfahren zur Herstellung eines Kathodenmateriales und spezielles Kathodenmaterial**

(71) Anmelder: Evonik Degussa GmbH, 45128 Essen (DE)
(72) Erfinder: Katusic, Stipan, 65812 Bad Soden (DE); Kress, Peter, 63791 Karlstein (DE); Hagemann, Michael, 63796 Kahl (DE); Wiegand, Armin, 63538 Großkrotzenburg (DE)
(74) Vertreter: Staab, Eugen

(57) **Zusammenfassung**

Verfahren zur Herstellung eines pulverförmigen Kathodenmaterials umfassend wenigstens ein Mischoxid enthaltend die Metallkomponenten Li, wenigstens eine weitere ausgewählt aus der Gruppe bestehend aus Mn, Ni und Co, bei dem man ein Ammoniak enthaltendes Aerosol, welches Metallverbindungen der Metallkomponenten enthält, in einer Hochtemperaturzone eines Reaktionsraumes zur Reaktion bringt und nachfolgend den Feststoff abtrennt.

## Beschreibung

Die Erfindung betrifft ein Verfahren zur Herstellung von Kathodenmaterialien für Lithiumionenbatterien mittels eines Spray-Pyrolyseverfahrens sowie spezielle Kathodenmaterialien selbst.

In EP-A-814524 wird ein Spraypyrolyseverfahren zur Herstellung eines Lithium-Mangan-Mischoxides offenbart, bei dem man Lithium- und Mangansalze, gelöst in einem Wasser/Alkoholgemisch, verdüst, das entstehende Aerosol mittels einer externen Beheizung bei 400 bis 900°C in Gegenwart von Sauerstoff pyrolysiert und das erhaltene Reaktionsprodukt nachfolgend thermisch behandelt um ein Lithium-Mangan-Mischoxid zu erhalten, welches einen mittleren Teilchendurchmesser zwischen 1 und 5 µm und eine spezifische Oberfläche zwischen 2 und 10 m²/g aufweist.

In EP-A-824087 wird ein analoges Verfahren zur Herstellung Lithium-Nickel-Mischoxiden bzw. Lithium-Kobalt-Mischoxiden offenbart.

In EP-A-876997 wird zusätzlich offenbart, dass zur Herstellung dieser Mischoxide Verbindungen wie Wasserstoffperoxid oder Salpetersäure eingesetzt werden, die bei der Pyrolyse Sauerstoff liefern.

Als nachteilig bei den in EP-A-814524, EP-A-824087 und EP-A-876997 offenbarten Verfahren ist die bei vielen Hochtemperaturprozessen zu beobachtende Thermophorese unter Bildung eines Wandbelages, der die eingetragene Energie mindert.

In WO2012/018863 wird ein Verfahren offenbart, bei dem eine Lösung, die ein Lithiumsalzes und ein Metallsalz mit Ni, Co, Mn, Al, Mg, Fe, Cu, Zn, V, Mo, Nb, Cr, Si, Ti, Zr, als Metall durch Versprühen in ein Aerosol überführt wird und dieses in eine Pyrolyseflamme eingebracht wird. Es werden überwiegend sphärische Partikel erhalten. Als nachteilig bei diesem Verfahren hat sich herausgestellt, dass die Verteilung der Metallkomponenten nicht homogen verteilt sind.

Taniguchi et al. (Journal of Power Sources 109 (2002) 333-339) offenbaren ein Spraypyrolyseverfahren zur Herstellung eines Lithium-Mischoxides der Zusammensetzung LiM_{1/6}Mn_{11/6}O₄ (M = Mn, Co, Al und Ni), bei dem ein Ultraschallvernebler zur Atomisierung einer Lösung der Nitrate in Wasser, 0,45 mol/l, eingesetzt wird. Die Temperatur wird durch einen elektrisch beheizten Reaktor bereitgestellt. Ein Ultraschallvernebler wird ebenfalls von Ogihara et al. (Transactions of the Materials Research Society of Japan 32 (2007) 717-720) bei der Spraypyrolyse zur Herstellung von Li[Ni_{1/3}Mn_{1/3}Co_{1/3}]O₂ eingesetzt.

Die Herstellung des letztgenannten Mischoxides via Spraypyrolyse wird auch von Kang et al. (Ceramics International 33 (2007) 1093-1098) beschrieben. Dabei werden Lösungen der Nitrate beziehungsweise Acetate von Nickel, Kobalt und Mangan sowie Lithiumcarbonate eingesetzt. Nach einem ähnlichen Verfahren beschreiben Kang et al. (Journal of Power Sources 178 (2008) 387-392) die Herstellung von LiNi_{0,8}Co_{0,15}Mn_{0,05}O₂.

Pratsinis et al. (Materials Chemistry and Physics 101 (2007) 372-378) beschreiben ein Spraypyrolyseverfahren zur Herstellung von LiMn₂O₄, Li₄Ti₅O₁₂ und LiFe₅O₈. Dabei werden Lithium-t-butoxid und Manganacetylacetonat beziehungweise Mangan-2-ethylhexanoat, Lithium-t-butoxid und Titanisopropoxid und Lithium-t-butoxid und Eisennaphthenat, eingesetzt. Ein ähnliches Verfahren beschreiben Pratsinis et al. in Journal of Power Sources 189 (2009) 149-154, bei dem die Acetylacetonate von Lithium und Mangan in einem Lösungsmittelgemisch aus 2-Ethylhexansäure und Acteonitril gelöst werden.

Nachteile der in der Journalliteratur offenbarten Spraypyrolyse-Verfahren sind deren geringe Durchsätze, so dass eine großtechnische Umsetzung nicht wirtschaftlich ist. Zudem eignen sich diese Anordnungen nicht die Prozesse auf höhere Durchsätze hochzurechnen.

Axelbaum et al. offenbaren in Journal of Power Sources 266 (2014) 175 -178 ein Flammenspraypyrolyse-Verfahren zur Herstellung von Li_{1,2}Mn_{0,54}Ni_{0,13}Co_{0,13}, mit dem die Bildung von Hohlkugeln vermieden werden kann. Hierzu ist es notwendig, das Material nach einer ersten Flammenspraypyrolyse in Gegenwart eines Lösungsmittels zu vermahlen, und die entstandene Dispersion erneut zu pyrolysieren.

Die technische Aufgabe der vorliegenden Erfindung bestand in der Bereitstellung eines Verfahrens, welches im großtechnischen Maßstab durchgeführt werden kann und bei dem ein Kathodenmaterial mit hoher Kapazität gebildet wird. Ein weiterer Gegenstand der Erfindung bestand in der Bereitstellung von Kathodenmaterial mit hoher Kapazität.

Gegenstand der Erfindung ist ein Verfahren zur Herstellung eines pulverförmigen Kathodenmaterials umfassend wenigstens ein Mischoxid enthaltend die Metallkomponenten Li, wenigstens eine weitere ausgewählt aus der Gruppe bestehend aus Mn, Ni und Co, bei dem man ein Ammoniak enthaltendes Aerosol, welches Metallverbindungen der Metallkomponenten enthält, in einer Hochtemperaturzone eines Reaktionsraumes zur Reaktion bringt und nachfolgend den Feststoff abtrennt.

Bevorzugt wird das Aerosol durch Verdüsen einer die Metallverbindungen enthaltenden Lösung mittels eines Zerstäubungsgases erhalten. Die Zerstäubung erfolgt am besten mittels einer Ein- oder Mehrstoffdüse, wobei der mittlere Tropfendurchmesser des Aerosols nicht mehr als 100 µm, bevorzugt 30 bis 100 µm, ist.

Die Konzentration von Ammoniak beträgt bevorzugt 0,5 - 5,0 kg NH₃ / kg der eingesetzten Metalle, besonders bevorzugt 0,8 - 2,8 kg/kg. Innerhalb dieser Bereiche ist der Einfluß auf die Homogenität der herzustellenden Metalloxidpartikel am größten.

In einer bevorzugten Ausführungsform ist die Hochtemperaturzone, in die das Gemisch eingebracht wird, eine Flamme, die durch die Reaktion eines Sauerstoff enthaltenden Gases und eines Brenngases, bevorzugt bei der Reaktion mit Sauerstoff Wasser bildendes Brenngas, gebildet wird.

Als Brenngas kann Wasserstoff, Methan, Ethan, Propan, Butan und deren Gemische eingesetzt werden. Bevorzugt wird Wasserstoff eingesetzt.

Das Sauerstoff enthaltende Gas ist in der Regel Luft. Die Menge an Sauerstoff ist bei dem erfindungsgemäßen Verfahren so zu wählen, dass sie mindestens zur vollständigen Umsetzung des Brenngases und aller Metallverbindungen ausreicht. Es ist in der Regel vorteilhaft einen Überschuss an Sauerstoff einzusetzen. Dieser Überschuss wird zweckmäßigerweise ausgedrückt als das Verhältnis von vorhandenem Sauerstoff / Verbrennung des Brenngases notwendiger Sauerstoff und als Lambda bezeichnet. Lambda beträgt bevorzugt 1,1 bis 6,0, besonders bevorzugt 2,0 bis 4,0.

Eine spezielle Ausführungsform der Erfindung sieht vor, dass für das Verhältnis mittlere Geschwindigkeit des Gemisches zu mittlerer Geschwindigkeit der Flamme 2 ≤ v_{Aerosol}/v_{Flamme} ≤ 10 gilt. Innerhalb dieses Bereiches wird eine besonders gleichmäßige Verteilung der Komponenten des Kathodenmateriales gefunden.

Das erfindungsgemäße Verfahren erlaubt auch die Herstellung eines dotierten Kathodenmateriales. Voraussetzung ist, dass die Lösung wenigstens eine Dotierverbindung enthält, die ein Metall ausgewählt aus der Gruppe bestehend aus Ag, Al, B, Ca, Cr, Cu, Fe, Ga, Ge, In, K, Mg, Mo, Na, Nb, Si, Sn, Ta, Ti, TI, V und Zr enthält. Ein besonders bevorzugtes Metall ist Al. Die Dotierverbindung wird bevorzugt in einer Menge eingesetzt, dass das spätere Kathodenmaterial nicht mehr als 10 Gew.-% an Dotierkomponente enthält, besonders bevorzugt 0,1 bis 5 Gew.-%.

Es ist für die vorliegende Erfindung vorteilhaft, wenn die Metallverbindungen in einer Lösung vorliegen. Um die Löslichkeit zu Erreichen und um eine geeignete Viskosität für das Zerstäuben der Lösung zu erzielen kann die Lösung erwärmt werden. Prinzipiell sind alle löslichen Metallverbindungen einsetzbar, die oxidierbar sind. Dabei kann es sich um anorganische Metallverbindungen, wie Nitrate, Chloride, Bromide, oder organische Metallverbindungen, wie Alkoxide oder Carboxylate anorganische und/oder organische Metallverbindungen handeln. Als Alkoxide können bevorzugt Ethylate, n-Propylate, iso-Propylate, n-Butylate und/oder tert.-Butylate eingesetzt werden. Als Carboxylate können die der Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure und/oder Laurinsäure zugrundeliegenden Verbindungen eingesetzt werden. In einer bevorzugten Ausführungsform wird wenigstens ein Metallnitrat eingesetzt.

Das Lösungsmitteln kann bevorzugt aus der Gruppe bestehend aus Wasser, C₁₅-C₂₀-Alkanen, C₁-C₁₅-Alkancarbonsäuren und/oder C₁-C₁₅-Alkanolen ausgewählt werden. Besonders bevorzugt kann Wasser oder ein Mischung aus Wasser und einem organischen Lösungsmittel eingesetzt werden. Als organische Lösungsmittel, beziehungsweise als Bestandteil von Gemischen von organischen Lösungsmitteln, können bevorzugt Alkohole wie Methanol, Ethanol, n-Propanol, isoPropanol, n-Butanol oder tert.-Butanol, Diole wie Ethandiol, Pentandiol, 2-Methyl-2,4-pentandiol, C₁-C₁₂-Carbonsäuren wie beispielsweise Essigsäure, Propionsäure, Butansäure, Hexansäure, Oxalsäure, Malonsäure, Bernsteinsäure, Glutarsäure, Adipinsäure, Octansäure, 2-Ethyl-Hexansäure, Valeriansäure, Caprinsäure, Laurinsäure eingesetzt werden. Weiterhin können Benzol, Toluol, Naphtha und/oder Benzin eingesetzt werden. Bevorzugte wird ein wässeriges Lösungsmittel eingesetzt.

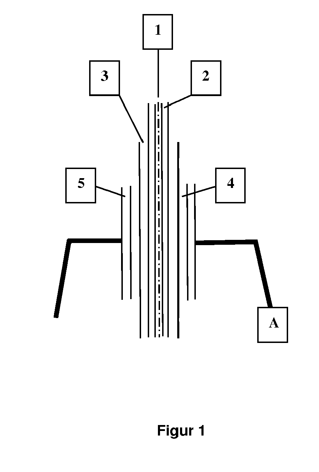

Figur 1 zeigt schematisch eine mögliche Anordnung zum Einbringen der Einsatzstoffe in den Rektionsraum, wobei gilt: 1 = Metallverbindungen enthaltende Lösung, 2 = Zerstäubungsgas, 3 = Ammoniak, 4 = Luft, 5 = Brenngas, A = Wand Reaktionsraum.

Eine weitere Ausführungsform der Erfindung sieht vor, dass man den abgetrennten Feststoff bei Temperaturen von 850 bis 1000°C, über einen Zeitraum von 2 bis 36 Stunden thermisch behandelt. Die Behandlung kann in Gegenwart von Luft oder mit Sauerstoff angereicherter Luft , entsprechend einem Sauerstoffanteil 21 - 40 Vol.-%, erfolgen. Die Behandlung in mit Sauerstoff angereicherter Luft liefert die besten Ergebnisse.

Ein weiterer Gegenstand der Erfindung ist ein pulverförmiges Kathodenmaterial in Form aggregierter Primärpartikel umfassend ein Mischoxidpulver mit einer Zusammensetzung entsprechend Li₁₊ₓ((NiₐCo_{b}Mn_{c})D_{d}O₂, sowie H und N als Nichtmetallkomponente, mit einem Anteil an H 0,01 - 0,1 Gew.-% und
einem Anteil an N von 0,002 - 0,05 Gew.-%, jeweils bezogen auf das pulverförmige Kathodenmaterial, wobei D = Ag, Al, B, Ca, Cr, Cu, Fe, Ga, Ge, In, K, Mg, Mo, Na, Nb, Si, Sn, Ta, Ti, Tl, V, und Zr und 0 < x ≤ 0,2; 0 < a ≤ 1; 0 ≤ b ≤ 1; 0 ≤ c ≤ 1, 0 ≤ d ≤ 0, 2 ist.

Bevorzugt ist 0 < x ≤ 0,2, 0,1 ≤ a ≤ 0,2; 0,05 ≤ b ≤ 0,2; 0,5 < c ≤ 0,6 und d = 0 oder 0 < x ≤ 0,2; 0 < a ≤ 1; b = 0; 0,5 < c ≤ 0,6 und 0,05 < d ≤ 0,1.

Primärpartikeln sind die kleinsten, nicht weiter zerlegbaren Partikel, die beispielsweise mittels Transmissionelektronenspektroskopie (TEM) detektierbar sind. Der mittlere Primärpartikeldurchmesser kann beispielsweise durch Auszählen der Partikel in TEM-Aufnahmen bestimmt werden. Mehrere Primärpartikel wachsen an ihren Kontaktstellen zu Aggregaten fest zusammen. Die Bestimmung der Aggregatdimensionen kann beispielsweise durch Laser-Diffraktometrie erfolgen. Das erfindungsgemäße Kathodenmaterial weist nach einer optionalen Temperung eine mittlere Partikelgröße von 1 bis 10 µm auf.

In einer speziellen Ausführungsform zeichnet sich das erfindungsgemäße pulverförmige Kathodenmaterial dadurch aus, dass die mittlere relative Konzentration der Elemente Ni, Mn und Co, die mittels TEM-EDX aus 18 zufällig ausgewählten Bereichen umfassend jeweils ein Volumen von ca. 500 nm³ des Kathodenmaterials bestimmt wird, nicht mehr als 5 % von der mittels ICP-OES, inductively coupled plasma optical emission spectrometry, bestimmten Konzentration des pulverförmigen Kathodenmateriales abweicht.

In einer speziellen Ausführungsform zeichnet sich das erfindungsgemäße pulverförmige Kathodenmaterial dadurch aus, dass die Standardabweichung der relativen Konzentration der Elemente Ni, Mn und Co, die mittels TEM-EDX aus 18 zufällig ausgewählten Bereichen umfassend jeweils ein Volumen von ca. 500 nm³ des Kathodenmaterials bestimmt wird, je Element höchstens 5% beträgt.

Ein weiterer Gegenstand der Erfindung die Verwendung des erfindungsgemäßen pulverförmigen Kathodenmateriales als Bestandteil von Lithiumionenbatterien.

### Beispiele

### Analytik

TEM-EDX: Die Proben werden jeweils an 18 verschiedenen, repräsentativen Stellen mittels EDX-Analyse untersucht. Das analysierte Volumen beträgt ca. 500 nm³ je Meßpunkt. Die Analysen wurden mit einem Transmissionselektroden-Mikroskop Jeol 2010F bei 200 kV Beschleunigungsspannung und einer Noran-EDX-Analyse mit der Auswertesoftware NSS 3.1 durchgeführt.

ICP-OES: Die Metallkonzentrationen werden mittels ICP-OES bestimmt. Vermessen wurden die Proben mit dem ICP-OES Optima, PerkinElmer. Die Ergebnisunsicherheit beträgt für die Metalle 0,5 - 2 % relativ.

H, N: Der Wasserstoff- und Stickstoffgehalt wird mittels des Elementanalysators TCH600, LECO, bestimmt. Die Ergebnisunsicherheit beträgt 0,8 - 1,0 %.

BET: Die BET-Oberfläche wird bestimmt nach DIN ISO 9277.

Elektrochemische Charakterisierung: Die Kathodenmaterialien werden in eine übliche Standardslurry eingearbeitet. Der Massenanteil des Kathodenmateriales in der Slurry beträgt 32,7 Gew.-%. Anschließend erfolgt die Zyklisierung der hergestellten elektrochemischen Zellen zwischen 2,0 und 4,6 V bei 25°C. Die Lade- und Entladeströme werden auf 25 mAh/g Kathodenmaterial festgesetzt.

Eingesetzte Lösungen: Für die Beispiele 1 bis 6 wird jeweils eine Lösung, die die in der Tabelle 1 genannten Salze enthält mit Wasser als Lösungsmittel hergestellt. Aus der Lösung und Zerstäuberluft wird mittels einer Düse ein Aerosol erzeugt, welches in einen Reaktionsraum zerstäubt wird. Hier brennt eine Knallgasflamme aus Wasserstoff und Luft, in der das Aerosol zur Reaktion gebracht wird. Nach Abkühlung wird das Kathodenmaterial an einem Filter von gasförmigen Stoffen abgetrennt. Das feste Produkt wird innerhalb von 3 bis 10 Stunden in einem Drehrohrofen auf eine Temperatur von 875 bis 1000°C erhitzt. Anschließend wird es bei dieser Temperatur über einen Zeitraum von 4 bis 10 Stunden gehalten und nachfolgend über einen Zeitraum von ca. 12 Stunden auf Raumtemperatur abkühlt.

Tabelle 1 nennt alle relevanten Parameter zur Herstellung des Kathodenmateriales sowie wichtige Stoffeigenschaften der erhaltenen Pulver, samt deren elektrochemischer Eigenschaften.

Tabelle 2 zeigt die homogene Verteilung eines Vergleichsmateriales, welches ohne Ammoniak erhalten hergestellt wurde, mit einem nach dem erfindungsgemäßen Verfahren hergestellten Kathodenmaterial.

**Tabelle 1: Herstellung von Li₁₊ₓ(NiₐCO_{b}Mn_{c})D_{d}O₂**

| | | Vgl. | Gemäß Erfindung | | | | |
|---|---|---|---|---|---|---|---|
| **Beispiel** | | 1 | 2 | 3 | 4 | 5 | 6 |
| x | | 0,2 | 0,2 | 0,2 | 0,2 | 0,2 | 0,2 |
| a | | 0,13 | 0,13 | 0,16 | 0,13 | 0,16 | 0,16 |
| b | | 0,13 | 0,13 | 0,08 | 0,13 | 0,08 | 0 |
| c | | 0,54 | 0,54 | 0,56 | 0,54 | 0,56 | 0,56 |
| D | | - | - | - | - | - | Al |
| d | | - | - | - | - | - | 0,08 |

| Flammenspraypyrolyse | | | | | | | |
|---|---|---|---|---|---|---|---|
| Lösung | | | | | | | |
| Lithiumnitrat | Gew.-% | 14,86 | 14,86 | 14,86 | 14,86 | 14,86 | 15,71 |
| Nickel(II)nitrat | Gew.-% | 4,09 | 4,09 | 4,09 | 4,09 | 4,09 | 5,54 |
| Mangan(11)nitrat | Gew.-% | 16,64 | 16,64 | 16,64 | 16,64 | 16,64 | 19,02 |
| Cobalt(11)nitrat | Gew.-% | 4,10 | 4,10 | 4,10 | 4,10 | 4,10 | 0 |
| Aluminiumnitrat | Gew.-% | 0 | 0 | 0 | 0 | 0 | 3,23 |
| Summe Metall | Gew.-% | 9,25 | 9,25 | 9,25 | 9,25 | 9,25 | 9,56 |
| Durchsatz | kg/h | 7 | 8 | 9 | 6 | 5 | 8 |
| Zerstäubungsuft | Nm³/h | 13 | 14 | 17 | 12 | 13 | 17 |
| Ammoniak | kg/h | - | 1,14 | 1,14 | 1,14 | 1,14 | 0,76 |
| Ammoniak/Metall | kg/kg | 0 | 1,54 | 1,37 | 2,05 | 2,46 | 0,99 |
| Wasserstoff | Nm³/h | 15 | 15 | 10 | 13 | 15 | 11 |
| Luft | Nm³/h | 75 | 75 | 80 | 85 | 75 | 75 |
| Lambda | | 2,10 | 2,10 | 3,36 | 2,75 | 2,10 | 2,86 |
| v_{Aerosol} | Nm/s | 134 | 134 | 119 | 93 | 87 | 87 |
| v_{Flamme} | Nm/s | 14,6 | 15,7 | 15,7 | 16,2 | 15,7 | 15,0 |
| v_{Aerosol}/v_{Flamme} | | 9,18 | 8,54 | 7,58 | 5,74 | 5,54 | 4,27 |
| T_{Flamme}^{a)} | °C | 783 | 808 | 511 | 947 | 1.086 | 680 |
| BET^{b)}_{FSP} | m²/g | 39 | 13 | 31 | 38 | 34 | 27 |
| | | | | | | | |

| Temperung | | | | | | | |
|---|---|---|---|---|---|---|---|
| T_{Ofen} | °C | 930 | 960 | 930 | 875 | 900 | 960 |
| t_{Tempern} | h | 6 | 6 | 6 | 6 | 6 | 6 |
| BET_{Temp} | m²/g | 6,76 | 3,41 | 7,26 | 8,75 | 8,33 | 4,10 |
| H ^{b)} | Gew.-% | 0,016 | 0,035 | 0,059 | 0,088 | 0,077 | 0,058 |
| N ^{b)} | Gew.-% | 0,010 | 0,030 | 0,009 | 0,027 | 0,004 | 0,002 |
| C/10 (2. Zyklus) | mAh/g | 202 | 246 | 240 | 253 | 241 | 173 |
| C/10 (60. Zyklus) | mAh/g | 172 | 222 | 224 | 233 | 219 | 177 |
| C10 (60. Zyk. / 2. Zyk.) | % | 85,1 | 90,2 | 93,3 | 92,1 | 90,9 | 102,3 |
| C3 | mAh/g | 151 | 207 | 206 | 194 | 204 | 130 |
| 1C | mAh/g | 111 | 142 | 161 | 143 | 157 | 103 |
| 1st Eff. | % | 60 | 74 | 72 | 79,8 | 73 | 64 |
| Fading 1C | mAhg⁻¹/Z | 0,136 | 0,096 | 0,078 | 0,037 | 0,082 | 0,150 |

| | | | | | | | |
|---|---|---|---|---|---|---|---|
| a) Flammentemperatur; gemessen 10 cm unterhalb des Einspeisungspunktes von Wasserstoff und Luft in den Reaktionsraum; b) nach der Temperung | | | | | | | |

**Tabelle 2: Homogenität des Kathodenmateriales (at.-% normiert auf 100)**

| **Beispiel** | 1 (Vergleich) | | | 2 (Gemäß Erfindung) | | |
|---|---|---|---|---|---|---|
| **Bild** | **Mn** | **Co** | **Ni** | **Mn** | **Co** | **Ni** |
| 1 | 66,7 | 16,7 | 16,7 | 68,6 | 17,1 | 15,3 |
| 2 | 64,3 | 17,9 | 17,9 | 65,6 | 15,6 | 16,8 |
| 3 | 70,4 | 14,8 | 14,8 | 68,0 | 16,0 | 16,0 |
| 4 | 68,0 | 16,0 | 16,0 | 70,4 | 14,8 | 15,8 |
| 5 | 70,4 | 14,8 | 14,8 | 65,7 | 20,0 | 15,3 |
| 6 | 71,0 | 16,1 | 12,9 | 64,9 | 18,9 | 16,2 |
| 7 | 72,0 | 16,0 | 12,0 | 66,7 | 17,9 | 15,4 |
| 8 | 75,0 | 12,5 | 12,5 | 66,7 | 18,5 | 14,8 |
| 9 | 35,0 | 30,0 | 35,0 | 67,9 | 17,9 | 15,3 |
| 10 | 52,2 | 18,9 | 18,9 | 69,2 | 15,4 | 15,4 |
| 11 | 44,2 | 27,9 | 27,9 | 66,7 | 18,5 | 15,8 |
| 12 | 58,8 | 20,6 | 20,6 | 70,4 | 14,8 | 14,8 |
| 13 | 71,0 | 16,1 | 12,9 | 63,0 | 18,5 | 18,5 |
| 14 | 66,7 | 16,7 | 16,7 | 66,7 | 16,7 | 16,7 |
| 15 | 54,1 | 14,8 | 11,1 | 70,0 | 16,7 | 16,3 |
| 16 | 65,6 | 21,9 | 12,5 | 68,0 | 16,0 | 16,0 |
| 17 | 65,4 | 17,3 | 17,3 | 69,0 | 17,2 | 15,8 |
| 18 | 69,2 | 15,4 | 15,4 | 71,9 | 15,6 | 15,5 |
| σ_{(EDX)} | 10,0 | 4,3 | 5,7 | 2,1 | 1,4 | 0,8 |
| m_{avg(EDX)} | 63,3 | 18,0 | 17,0 | 67,7 | 17,0 | 15,9 |
| m_{avg(ICP)} | 66,8 | 17,1 | 16,1 | 66,8 | 17,1 | 16,1 |
| m_{avg(EDX)} / m_{avg(ICP)} | 94,8 | 105,4 | 105,6 | 101,4 | 99,4 | 98,6 |

## Patentansprüche

1. Verfahren zur Herstellung eines pulverförmigen Kathodenmaterials umfassend wenigstens ein Mischoxid enthaltend die Metallkomponenten Li, wenigstens eine weitere ausgewählt aus der Gruppe bestehend aus Mn, Ni und Co, bei dem man ein Ammoniak enthaltendes Aerosol, welches Metallverbindungen der Metallkomponenten enthält, in einer Hochtemperaturzone eines Reaktionsraumes zur Reaktion bringt und nachfolgend den Feststoff abtrennt.

2. Verfahren zur Herstellung des pulverförmigen Kathodenmaterials nach Anspruch 1, **dadurch gekennzeichnet, dass**
das Aerosol durch Verdüsen einer die Metallverbindungen enthaltenden Lösung mittels eines Zerstäubungsgases erhalten wird.

3. Verfahren nach den Ansprüchen 1 oder 2, **dadurch gekennzeichnet, dass**
die Konzentration von Ammoniak 0,5 - 5,0 kg/kg Summe der eingesetzten Metalle, in kg/kg, beträgt.

4. Verfahren nach den Ansprüchen 1 bis 3, **dadurch gekennzeichnet, dass**
die Zerstäubung mittels einer Ein- oder Mehrstoffdüse erfolgt und der mittlere Tropfendurchmesser des Aerosols nicht mehr als 100 µm ist.

5. Verfahren nach den Ansprüchen 1 bis 4, **dadurch gekennzeichnet, dass**
die Hochtemperaturzone, in die das Aerosol eingebracht wird, eine Flamme ist, die durch die Reaktion eines Sauerstoff enthaltenden Gases und eines Brenngases gebildet wird.

6. Verfahren nach Anspruch 5, **dadurch gekennzeichnet, dass**
für das Verhältnis mittlere Geschwindigkeit des Gemisches zu mittlerer Geschwindigkeit der Flamme gilt: 2 ≤ v_{Aerosol}/v_{Flamme} ≤ 10.

7. Verfahren nach den Ansprüchen 1 bis 6, **dadurch gekennzeichnet, dass**
die Lösung wenigstens eine Dotierverbindung enthält, die ein Metall ausgewählt aus der Gruppe bestehend aus Ag, Al, B, Ca, Cr, Cu, Fe, Ga, Ge, In, K, Mg, Mo, Na, Nb, Si, Sn, Ta, Ti, TI, V und Zr enthält.

8. Verfahren nach den Ansprüchen 1 bis 7, **dadurch gekennzeichnet, dass**
wenigstens eine Metallverbindung ein Nitrat ist.

9. Verfahren nach den Ansprüchen 1 bis 8, **dadurch gekennzeichnet, dass**
man den abgetrennten Feststoff bei Temperaturen von 850 bis 1000°C über einen Zeitraum von 2 bis 36 Stunden thermisch behandelt.

10. Pulverförmiges Kathodenmaterial in Form aggregierter Primärpartikel umfassend ein Mischoxidpulver mit einer Zusammensetzung entsprechend Li₁₊ₓ(NiₐCo_{b}Mn_{c})D_{d}O₂, sowie H und N als Nichtmetallkomponente, mit einem Anteil an H 0,01 - 0,1 Gew.-% und einem Anteil an N von 0,002 - 0,05 Gew.-%, jeweils bezogen auf das pulverförmige Kathodenmaterial, wobei D = Ag, Al, B, Ca, Cr, Cu, Fe, Ga, Ge, In, K, Mg, Mo, Na, Nb, Si, Sn, Ta, Ti, Tl, V, und Zr und 0 < x ≤ 0,2; 0 < a ≤ 1; 0 ≤ b ≤ 1; 0 ≤ c ≤ 1, 0 ≤ d ≤ 0, 2 ist.

11. Pulverförmiges Kathodenmaterial in Form aggregierter Primärpartikel nach Anspruch 10, **dadurch gekennzeichnet, dass**
0 < x ≤ 0,2, 0,1 ≤ a ≤ 0,2; 0,05 ≤ b ≤ 0,2; 0,5 < c ≤ 0,6 und d = 0 ist.

12. Pulverförmiges Kathodenmaterial in Form aggregierter Primärpartikel nach Anspruch 10, **dadurch gekennzeichnet, dass**
0 < x ≤ 0,2; 0 < a ≤ 1; b = 0; 0,5 < c ≤ 0,6 und 0,05 < d ≤ 0,1 ist.

13. Pulverförmiges Kathodenmaterial in Form aggregierter Primärpartikel nach den Ansprüchen 11 oder 12, **dadurch gekennzeichnet, dass**
die mittlere relative Konzentration der Elemente Ni, Mn und Co, die mittels TEM-EDX aus 18 zufällig ausgewählten Bereichen umfassend jeweils ein Volumen von ca. 500 nm³ µm des Kathodenmaterials bestimmt wird, nicht mehr als 5 % von der mittels ICP-OES, inductively coupled plasma optical emission spectrometry, bestimmten Konzentration des pulverförmigen Kathodenmateriales abweicht.

14. Pulverförmiges Kathodenmaterial in Form aggregierter Primärpartikel nach den Ansprüchen 11 bis 13, **dadurch gekennzeichnet, dass**
die Standardabweichung der relativen Konzentration der Elemente Ni, Mn und Co, die mittels TEM-EDX aus 18 zufällig ausgewählten Bereichen umfassend jeweils ein Volumen von ca. 500 nm³ des Kathodenmaterials bestimmt wird, je Element höchstens 5% beträgt.

15. Verwendung des pulverförmigen Kathodenmateriales gemäß der Ansprüche 10 bis 14 als Bestandteil von Lithiumionenbatterien.
